# EUROPEAN PATENT APPLICATION

(11) **EP 2 457 449 A1**
(43) Date of publication of application: **30.05.2012**
(21) Application number: 10802343.3
(22) Date of filing: 23.07.2010
(51) Int. Cl.: A23G 3/34

(54) **MULTIPLE-REGION CANDY AND MANUFACTURING METHOD THEREFOR**

(30) Priority: 24.07.2009 JP 2009173654
(71) Applicant: Nihon Kraft Foods Limited, Tokyo 141-8656 (JP)
(72) Inventor: KAMAKURA, Yoshimitsu, Tokyo 141-8656 (JP); SHIKAWA, Eisuke, Tokyo 141-8656 (JP); SEGAWA, Hiroshi, Tokyo 141-8656 (JP)
(74) Representative: Wilson Gunn
(86) International application number: PCT/JP2010/062435
(87) International publication number: WO 2011/010723

(57) **Abstract**

Disclosed is a candy wherein loss of a soft component contained therein is minimized, allowing the benefits of the soft component to be enjoyed, and a feeling of roughness in the mouth is reduced. Also disclosed is a method for manufacturing said candy. The disclosed candy (10) is provided with: a first region (20) containing a dispersion comprising a liquid dispersoid and an oil-based dispersion medium; and a second region (30) that at least partially encloses the first region (20) and comprises a hard candy composition that has been hardened. The disclosed method for manufacturing the candy comprises a procedure wherein the dispersion, which comprises the liquid dispersoid and the oil-based dispersion medium, is positioned in a melted hard candy composition and then said melted composition is hardened.

## Description

### TECHNICAL FIELD

The present invention relates to a multi-region confectionery and a method for manufacturing the same.

### BACKGROUND ART

Conventionally, a multitude of candies in which a soft, aqueous, component such as jam, paste, syrup and the like is coated by a hard candy have been developed. These candies are manufactured by a stamping process, in other words, by extending an entirety of the soft component sandwiched by the hard candy and then tearing off candies therefrom by stamping using a stamp of a desired size (for example, see Japanese Unexamined Patent Application Publication No. 2004-305078). Patent Document 1: Japanese Patent Application Publication No. 2004-305078

### DISCLOSURE OF THE INVENTION

### Problems to be Solved by the Invention

However, the abovementioned conventional candies have a problem in that a soft component flows out quickly while being licked, and of the hard candy (a shell candy) solely remaining in the oral cavity. This is because both ends of the shell candy become very thin during a manufacturing process, due to the soft component not being disposed evenly in a center of the confectionery. Therefore, the conventional candies generally can include only about 10% of the soft component, and thus a consumer cannot fully enjoy different textures of the shell candy and of the soft component.

In addition, holes of various sizes are formed on the candies due to a large amount of air bubbles generated in the hard candy during a manufacturing process, the roughness of which often gives an unpleasant feeling to the oral cavity.

The present invention is proposed in view of the abovementioned circumstances and aims at providing a confectionery and a manufacturing method thereof that can inhibit flowing out of the soft component included in a candy, thereby making the most of an advantage thereof, and can suppress roughness felt in the mouth.

### Means for Solving the Problems

The present inventors have found that, by at least partially surrounding a first region including a dispersed system composed of a liquid dispersoid and an oil-based dispersion medium by a second region composed of a cured body of a hard candy composition, even a large amount of a soft component can be disposed in a center of a candy, thereby delaying the flowing out thereof into the mouth and allowing a consumer to sense the soft component when finishing the candy; and the generation of air bubbles can be largely suppressed, thereby suppressing roughness felt in the mouth, and thus arrived at the completion of the present invention. More specifically, the present invention provides the following.

In a first aspect of the present invention, multi-region confectionery includes: a dispersed system composed of a liquid dispersoid and an oil-based dispersion medium; and a second region composed of a cured body of a hard candy composition, which surrounds at least a portion of the first region.

According to a second aspect of the present invention, in the multi-region confectionery as described in the first aspect, the oil-based dispersion medium has a pour point or a melting point of no greater than 37°C.

According to a third aspect of the present invention, in the multi-region confectionery as described in the second aspect, the oil-based dispersion medium has a pour point or a melting point of no greater than 20°C.

According to a fourth aspect of the present invention, in the multi-region confectionery as described in the first aspect, the oil-based dispersion medium has a pour point or a melting point of no less than 20°C and no greater than 45°C.

According to a fifth aspect of the present invention, in the multi-region confectionery as described in any one of the first to fourth aspects, the dispersed system presents in an amount of at least 5% by mass of the entire multi-region confectionery.

According to a sixth aspect of the present invention, in the multi-region confectionery as described in any one of the first to fourth aspects, the dispersed system presents in an amount of no greater than 70% by mass of the entire multi-region confectionery.

According to a seventh aspect of the present invention, in the multi-region confectionery as described in the fifth or sixth aspects, the dispersed system is included in an amount of from 15% to 50% by mass of the entire multi-region confectionery.

According to an eighth aspect of the present invention, in the multi-region confectionery as described in any one of the first to seventh aspects, the multi-region confectionery has a piece size of no greater than 2 g.

According to a ninth aspect of the present invention, in the multi-region confectionery as described in any one of the first to eighth aspects, the dispersed system comprises an emulsifier.

According to a tenth aspect of the present invention, in the multi-region confectionery as described in the ninth aspect, the emulsifier is selected from the group consisting of monoglycerol fatty acid ester, lecithin, organic acid glycerin fatty acid ester, polyglycerol fatty acid ester, polyglycerol condensed ricinoleic acid ester, sorbitan fatty acid ester; sucrose fatty acid ester; propylene glycol fatty acid ester; and combinations thereof.

According to an eleventh aspect of the present invention, in the multi-region confectionery as described in the tenth or eleventh aspect, the emulsifier is selected from the group consisting of glycerin based emulsifiers, polyglycerol based emulsifiers, and combinations thereof.

According to a twelfth aspect of the present invention, in the multi-region confectionery as described in any one of the first to eleventh aspects, the first region is released after an initial phase of consumption.

According to a thirteenth aspect of the present invention, in the multi-region confectionery as described in the twelfth aspect, the first region release provides a liquid sensation.

According to a fourteenth aspect of the present invention, in the multi-region confectionery as described in the twelfth aspect, the first region release provides a solid sensation.

In a fifteenth aspect of the present invention, a manufacturing method for a multi-region confectionery includes steps of: disposing a dispersed system composed of a liquid dispersoid and an oil-based dispersion medium within a hard candy composition melt; and then curing the melt.

According to a sixteenth aspect of the present invention, in the manufacturing method as described in the fifteenth aspect, the oil-based dispersion medium has a pour point or a melting point of no greater than 37°C.

According to a seventeenth aspect of the present invention, in the manufacturing method as described in the sixteenth aspect, the oil-based dispersion medium has a pour point or a melting point of no greater than 20°C.

According to an eighteenth aspect of the present invention, in the multi-region confectionery as described in the fifteenth aspect, the oil-based dispersion medium has a pour point or a melting point of no less than 20°C and no greater than 45°C.

According to a nineteenth aspect of the present invention, in the manufacturing method as described in the any one of fifteenth to eighteenth aspects, a depositor is used having a double pipe structure comprising: an inner pipe; and an outer pipe provided on an outer side of the inner pipe with a gap, and pouring is performed to deposit the dispersed system from the inner pipe and the melt from the gap.

According to a twentieth aspect of the present invention, in the manufacturing method as described in the nineteenth aspect, the deposition is performed by: preferentially pouring the melt; pouring the dispersed system and the melt; and then preferentially pouring the melt.

According to a twenty-first aspect of the present invention, in the manufacturing method as described in any one of the fifteenth to twentieth aspects, the dispersed system is included in an amount of no less than 5% by mass of the entire multi-region confectionery.

According to a twenty-second aspect of the present invention, in the manufacturing method as described in any one of the fifteenth to twenty-first aspects, the dispersed system is included in an amount of no greater than 70% by mass of the entire multi-region confectionery.

According to a twenty-third aspect of the present invention, in the manufacturing method as described in twenty-first or twenty-second aspects, the dispersed system is included in an amount of from about 15% to about 50% by mass of the entire multi-region confectionery.

According to a twenty-fourth aspect of the present invention, in the manufacturing method as described in any one of the fifteenth to twenty-third aspects, the multi-region confectionery has a piece size of no greater than 2 g.

According to a twenty-fifth aspect of the present invention, in the manufacturing method as described in any one of the fifteenth to twenty-fourth aspects, the dispersed system comprises an emulsifier.

According to a twenty-sixth aspect of the present invention, in the manufacturing method as described in a twenty-fifth aspect, the emulsifier is selected from the group consisting of monoglycerol fatty acid ester, lecithin, organic acid glycerin fatty acid ester, polyglycerol fatty acid ester, polyglycerol condensed ricinoleic acid ester, sorbitan fatty acid ester; sucrose fatty acid ester; propylene glycol fatty acid ester; and combinations thereof.

According to a twenty-seventh aspect of the present invention, in the manufacturing method as described in a twenty-fifth or twenty-sixth aspect, the emulsifier is selected from the group consisting of glycerin based emulsifiers, polyglycerol based emulsifiers, and combinations thereof.

According to a twenty-eighth aspect of the present invention, in the manufacturing method as described in any one of the fifteenth to twenty-seventh aspects, the dispersed system is released after an initial phase of consumption.

According to a twenty-ninth aspect of the present invention, in the manufacturing method as described in the twenty-eighth aspect, the first region release provides a liquid sensation.

According to a thirtieth aspect of the present invention, in the manufacturing method as described in the twenty-eighth aspect, the first region release provides a solid sensation.

According to the present invention, by at least partially surrounding a first region including a dispersed system composed of a liquid dispersoid and an oil-based dispersion medium by a second region composed of a cured body of a hard candy composition, even a large amount of a soft component can be disposed in a center of a candy, thereby retarding the flowing out thereof into the mouth and allowing a consumer to sense the large amount of the soft component when finishing the candy and maximizing an advantage thereof; and since air bubbles generation can be largely suppressed, a roughness felt in the mouth can be reduced.

### PREFERRED MODE FOR CARRYING OUT THE INVENTION

Embodiments of the present invention are described hereinafter; however, the present invention is not limited thereto.

### Multi-Region Confectionery

A multi-partitioned confectionery according to one embodiment of the present invention includes: a dispersed system composed of a liquid dispersoid and an oil-based dispersion medium; and a second region composed of a cured body of a hard candy composition, which surrounds at least a portion of the first region. By including the dispersed system composed of the liquid dispersoid and the oil-based dispersion medium in the first region, the first region can be surrounded at least partially by the second region composed of a cured body of a hard candy composition. This can maximize an advantage of active ingredients.

Unlike a conventional stamping method, since the air bubble generating factors in a manufacturing process such as extending are small, an unpleasant roughness felt in the mouth can be suppressed. In a case where an aqueous active ingredient (aqueous single phase or a dispersed system with an aqueous dispersion medium) is disposed in a melt, it is difficult to maximize an advantage of the soft component since the active ingredient in a soft component is dissolved in the melt. However, by using dispersed system composed of a liquid dispersoid and an oil-based dispersion medium, the present invention can maximize an advantage of the soft component since the active ingredient can be contained.

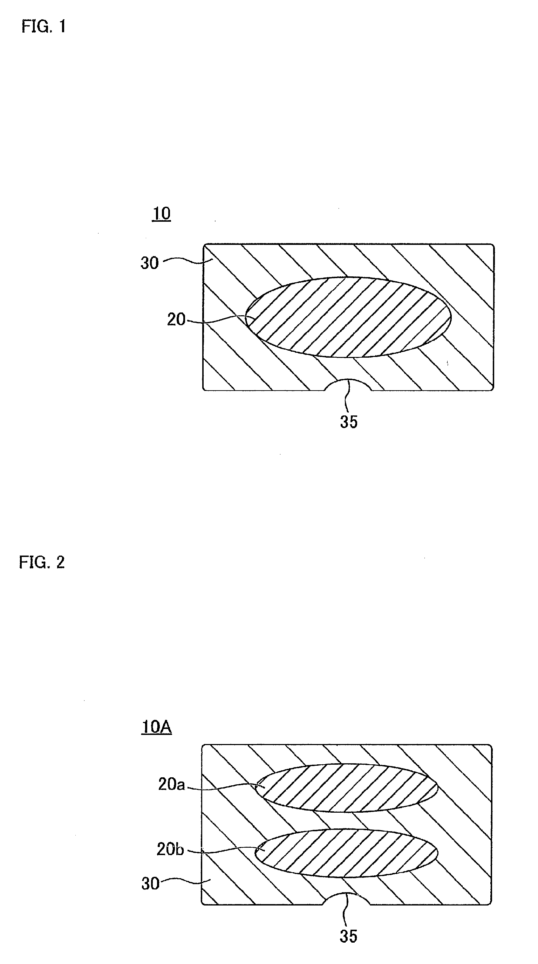

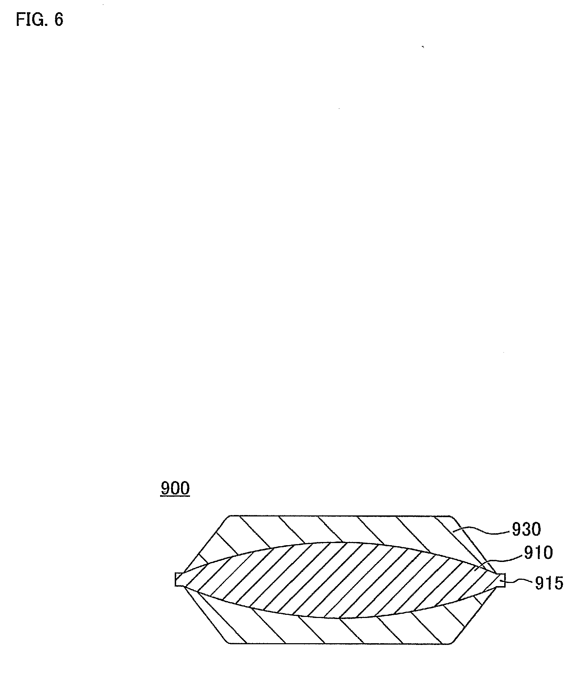

As shown in FIG. 6, a conventional confectionery 900 manufactured by the stamping method has cracking 915 on a surface of a hard candy layer 930 and a central layer 910, generated by being sandwiched between stamp dies. On the other hand, a confectionery manufactured by a deposition method, as in the present invention, does not have the cracking. As a result, since the soft component is disposed in a center of the confectionery manufactured by a deposition method, flowing out thereof into the mouth is delayed, and the soft component does not flow out into the mouth immediately upon licking. In addition, the confectionery is generally removed from a deposit die being pressed from a bottom thereof by a rod-shaped body (details are described later), and therefore, as shown in FIG. 1, a confectionery 10 of the present invention often has an impression 35 generated by the rod-shaped body.

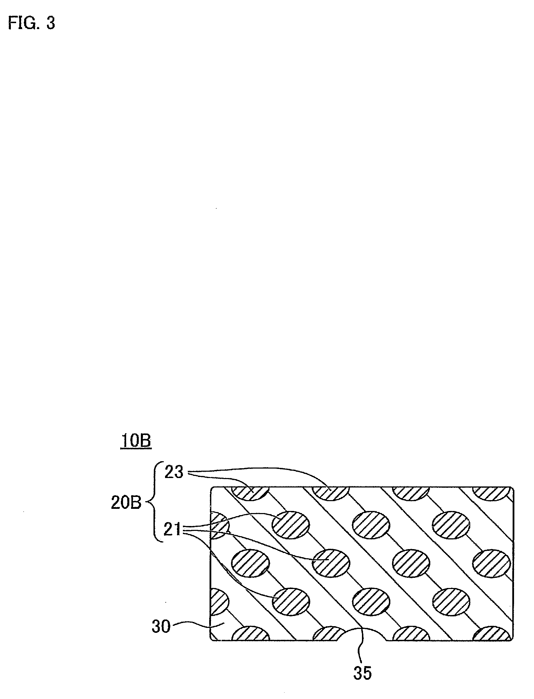

Although the arrangement of the first region and the second region is appropriately changed in accordance with a combination of selected conditions (described later), the first region 20 is preferably completely surrounded by the second region 30. In FIG. 1, the first region 20 is disposed substantially in a center of the confectionery 10; however, the present invention is not limited thereto and the first region 20 can also be disposed not in the center in a height direction (a vertical direction in FIG. 1) and/or in a width direction (a horizontal direction in FIG. 2). In addition, as shown in FIG. 2, a plurality of first regions 20a and 20b can be surrounded by the second region 30, or, as shown in FIG. 3, a minutely divided first region 20B can be dispersed in the second region and can include partially covered regions 23 that are only partially surrounded, along with completely covered regions 21 that are completely surrounded.

### Dispersed System

If the first region is an aqueous single phase or a dispersed system with an aqueous dispersion medium, the dispersed system can easily be mixed, dissolved, or dispersed into the hard candy composition melt, which is also aqueous, and thus the first region tends to dissolve or mix into the second region and to lose a liquid sensation. In addition, confectionery tends to have a structure where minutely divided encapsulated bodies are dispersed in a cured body of the hard candy. On the other hand, since the dispersion medium used in the present embodiment is oil-based and not easily dispersed into the hard candy composition melt, a structure where a large encapsulated body of active ingredients is surrounded by the cured body of the hard candy tends to be formed. In a case where the large encapsulated body of active ingredients is formed, a fairly large solid (e.g., fruit fragments and dried fruit) can be included also in the encapsulated body, thereby further improving functionality thereof. Therefore, in the confectionery of the present invention, the hard candy can surround a large amount of active ingredients, and a consumer can taste the active ingredients in a final stage of consumption of the confectionery (after finishing the cured body of the hard candy).

The term "oil-based dispersion medium" indicates a dispersion medium that does not mix or dissolve into water or hard candy that is the second region, under a temperature condition where the dispersion medium is liquid. The oil-based dispersion medium can be conventional and well-known oils and fats, especially edible oils and fats, which include, for example, butter oil, hydrogenated oil, vegetable oil (for example, palm oil, safflower oil, rapeseed oil, olive oil, tea seed oil, camellia oil), and the like.

The oil-based dispersion medium preferably has a pour point or a melting point of no greater than 37°C, and more preferably of no greater than 20°C. In such a configuration, the dispersion medium is fluidized in the oral cavity, which is normally about 37°C, and a masticator can enjoy benefit of a soft component. However, the pour point of the dispersion medium can be greater than 37°C depending on a purpose of a confectionery. In some embodiments, a the dispersion medium with a pour point of no greater than 37°C is used in a soft component that easily provides a liquid sensation while in other embodiments a the dispersion medium with a pour point of no greater than 20°C is used in a soft component that provides a highly liquid sensation while in still other embodiments a the dispersion medium with a pour point of greater than 37°C and of no greater than 45°C (more specifically no greater than 40°C) is used in a soft component that easily provides a solid sensation. The pour point is measured according to a method defined in ASTM D5949 or JIS K 2249. The melting point is measured according to a method defined in ASTM D127 or JIS K 2235.

Here, the term "liquid dispersoid" indicates a dispersoid that is liquid at ambient temperature (generally, no less than 20°C) and does not easily mix or dissolve into the abovementioned oil-based dispersion medium. More specifically, the dispersoid in the present invention is a dispersoid that is hydrophilic or hydrosoluble and can be mixed or dissolved in water at ambient temperature, for example appropriate coloring, flavoring, a fruit based product, a sweetener (sugar, polyol, syrup, or honey), a treatment agent, a hydrocolloid and the like. It should be noted that the dispersoid in the present invention is not necessarily required to include moisture and may substantially not include moisture. The liquid dispersoid can be a dispersoid where oil or solid is dispersed in dispersion medium, and in this case, dispersed system constituting the first region has a multi-layered construction such as O/W/O, W/O/W/O and the like.

In view of improved stability of the dispersed system, the dispersed system preferably includes an emulsifier. The emulsifier constituting the W/O type emulsion is not particularly limited and can be a conventional and well-known emulsifier; however, in view of safety, preferred are: glycerin based emulsifiers such as monoglycerol fatty acid ester, lecithin, organic acid glycerin fatty acid ester and the like; polyglycerol based emulsifiers such as polyglycerol fatty acid ester, polyglycerol condensed ricinoleic acid ester and the like; sorbitan fatty acid ester; sucrose fatty acid ester; propylene glycol fatty acid ester; and the like.

Particularly in forming of a dispersed system by using an oil-based dispersion medium having a pour point of no greater than 20°C, in other words, in forming of a W/O type emulsion, if stability thereof is not sufficient, there may be a problem of an oil phase separated from an aqueous phase leaking into the hard candy composition during or after manufacture of a confectionery. Given this, glycerin based emulsifiers such as monoglycerol fatty acid ester, lecithin, organic acid glycerin fatty acid ester and the like; polyglycerol based emulsifiers such as polyglycerol fatty acid ester, polyglycerol condensed ricinoleic acid ester and the like are preferred, which can form a highly stable W/O type emulsion, thereby allowing for a larger amount of active ingredients to be surrounded by the hard candy; however, the present invention is not limited thereto. As used herein, the W/O emulsion is a synonym to a water-in-oil emulsion and indicates a system in which a discontinuous aqueous phase is dispersed in an oil phase.

It should be noted that, by forming a dispersed system using a oil-based dispersion medium having a pour point or a melting point of no less than 20°C and no greater than 45°C, stability of the dispersed system can be obtained with or without using various emulsifiers.

Content of the dispersed system can be accordingly set so as to inhibit leakage of the active ingredients, with consideration for composition and configuration of the dispersed system, content of the active ingredients, and the like. However, the dispersed system is included in an amount of preferably no less than 5% by mass, more preferably no less than 10% by mass, and most preferably no less than 15% by mass with respect to a mass of the entire multi-region confectionery, in order to maximize an advantage of the active ingredients. In addition, for a greater rate of inhibition of the leakage of the active ingredients, the dispersed system is included in an amount of preferably no greater than 70% by mass, more preferably no greater than 60% by mass, and most preferably no greater than 50% by mass with respect to a mass of the entire multi-region confectionery.

A ratio of the dispersoid to the dispersion medium constituting the dispersed system can be appropriately set in accordance with the amount of the active ingredient to be blended, the emulsifier to be used, and the like. For example, the ratio of the dispersoid to the dispersion medium is no greater than 97/3 (M/M). The dispersion system may be prepared by any conventional methods. For example, a liquid dispersoid can be added in small amounts to an oil-based dispersion medium (in some cases, a mixture further including an emulsifier), and agitated.

### Active Ingredients

As described above, the dispersed system and/or the hard candy composition can further contain active ingredients such as coloring, flavoring, a fruit based product, a sweetener, a treatment agent and the like. Such active ingredients can be conventional and well-known active ingredients, an example of which is described in the Pamphlet of PCT International Application Publication No. WO2008/079927 (incorporated herein by reference) and the like. Such active ingredients can also include additives, such as warming agents, cooling agents, tingling agents, flavors, sweeteners, sour tastes, bitter tastes, salty tastes, surfactants, breath freshening agents, anti-microbial agents, anti-bacterial agents, anti-calculus agents, antiplaque agents, fluoride compounds, remineralization agents, pharmaceuticals, micronutrients, throat care actives, tooth whitening agents, energy boosting agents, concentration boosting agents, appetite suppressants, colors and other actives, may also be included in any or all portions or regions of the confectionery. Such components may be used in amounts sufficient to achieve their intended effects.

### Hard Candy Composition

The hard candy composition can be configured by a conventional and well-known composition. More specifically, the hard candy composition can include sucrose and starch syrup as main components, or can be of sugarless type not containing sucrose. The present invention also includes brown sugar candy containing brown sugar in place of a part of the sucrose, and milk candy containing a dairy product such as condensed milk in place of a part of the sucrose. For a sugarless type candy, an arbitral sugarless material such as reduced paratinose, sorbitol, maltitol, maltotriitol, reduced saccharified starch and the like can be used as glucide. The hard candy composition can appropriately comprise, along with sucrose, starch syrup, brown sugar, dairy product and other sugarless materials, as well as suitable coloring, flavoring, a fruit based product, a sweetener, a treatment agent and the like.

### Manufacturing Method of Multi-Region Confectionery

A manufacturing method of the multi-region confectionery according to the present invention includes steps of:
disposing a dispersed system composed of the liquid dispersoid and the oil-based dispersion medium within a hard candy composition melt; and then curing the melt. Unlike a conventional stamping method, since the air bubble generating factors in a manufacturing process such as extending are small, an unpleasant roughness felt in the mouth can be suppressed.

In addition, since the soft component is disposed in a center of the confectionery, flowing out thereof into the mouth is delayed, and the soft component does not flow out into the mouth immediately upon licking. Furthermore, by using a dispersed system composed of the liquid dispersoid and the oil-based dispersion medium, the present invention can provide an advantage of the soft component since the active ingredient can be contained.

To be included in a range of "disposing a dispersed system composed of the liquid dispersoid and the oil-based dispersion medium within the hard candy composition melt; and then curing the melt", the dispersed system is required to be positioned in the melt at the beginning of the curing. In other words, it is preferable that the dispersed system stays within the melt from the beginning to the end of the curing; however, a part of the dispersed system can be dispersed into the melt.

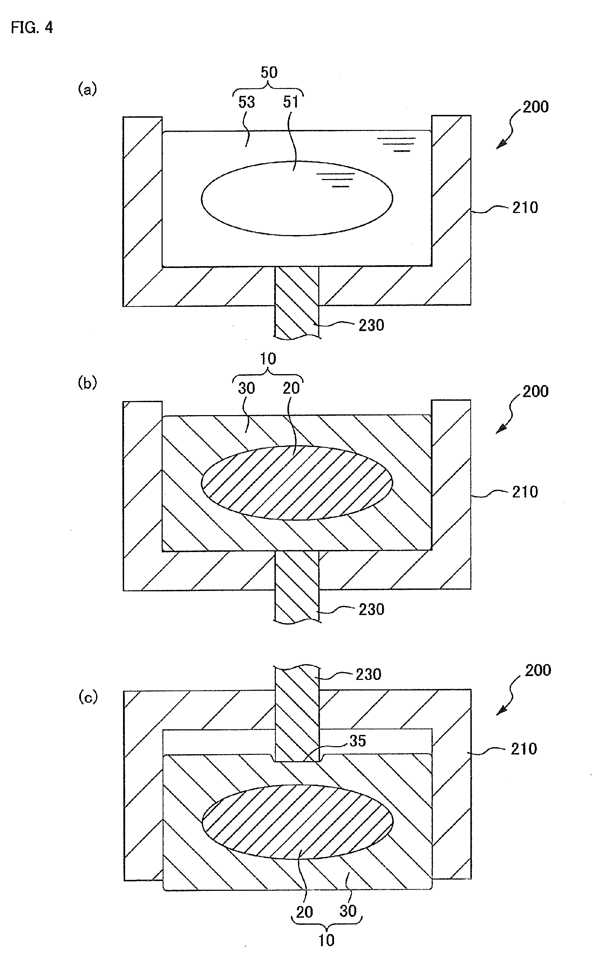

Generally, first, the hard candy composition melt and the dispersed system are fed into a die main body 210 of a deposit die 200, so as to dispose the W/O type emulsion 51 within the melt 53, as shown in FIG. 4a. Thereafter, by curing the melt 53, a multi-region confectionery 10 is formed including: a first region 20 composed of dispersed system and a second region 30 composed of a cured body of the hard candy composition, which surrounds at least a portion of the first region 20 (FIG. 4b). Generally, the confectionery 10 is removed from the die main body 210 being pressed by a rod-shaped body 230 provided in a bottom of the die main body 210 (FIG. 4c). The abovementioned impression 35 is thus formed.

The dispersed system 51 can be disposed within the melt 53 by arbitral steps, which are not particularly limited. For example, steps of: feeding the melt into the die main body 210; pouring the dispersed system toward the melt; further feeding the melt so as to cover the dispersed system; and curing the melt, can be adopted. However, the process causes the manufacturing time to be extended.

Therefore, it is preferable to use a depositor having a double pipe structure including: an inner pipe; and an outer pipe that is provided on an outer side of the inner pipe with a gap, and pouring is performed to deposit the dispersed system from the inner pipe and the melt from the gap. This allows the dispersed system to be disposed in a center of the melt (especially in a width direction; a horizontal direction of FIG. 4) just by pouring thereof, and thus a reduction of manufacturing time can be expected. It should be noted that the depositor can further include other pipes (in other words, a three pipe structure or more) as long as the double pipe structure is provided, or the outer pipe can have a plurality of flow paths as described in PCT International Application Publication No. WO2008/079927.

Deposition in particular is preferably performed by: preferentially pouring the melt; pouring the dispersed system and the melt; and then preferentially pouring the melt. This allows for the dispersed system to be disposed in a center of the melt (especially in a height direction; a vertical direction of FIG. 4), and thus reduces the manufacturing time even with a single curing process.

In addition, in a process of feeding the melt into the die main body 210 and then pouring the dispersed system toward the melt, a structure in which the dispersed system is coated by the melt cannot be easily formed, since, as the amount of the melt gets smaller, the melt contacting the die main body 210 is cooled and hardened in a shorter time. However, in the abovementioned process, since the dispersed system already coated by the melt is deposited into the die main body 210, a coated structure can be formed even with a small amount of melt. Hence, according to the abovementioned process, size of a confectionery can be chosen from a wide range and flexibility in design can be improved, thereby allowing high-quality manufacture of a small-sized confectionery in which, for example, a total weight of the first and the second regions is of no greater than 2 g, which has conventionally been impossible.

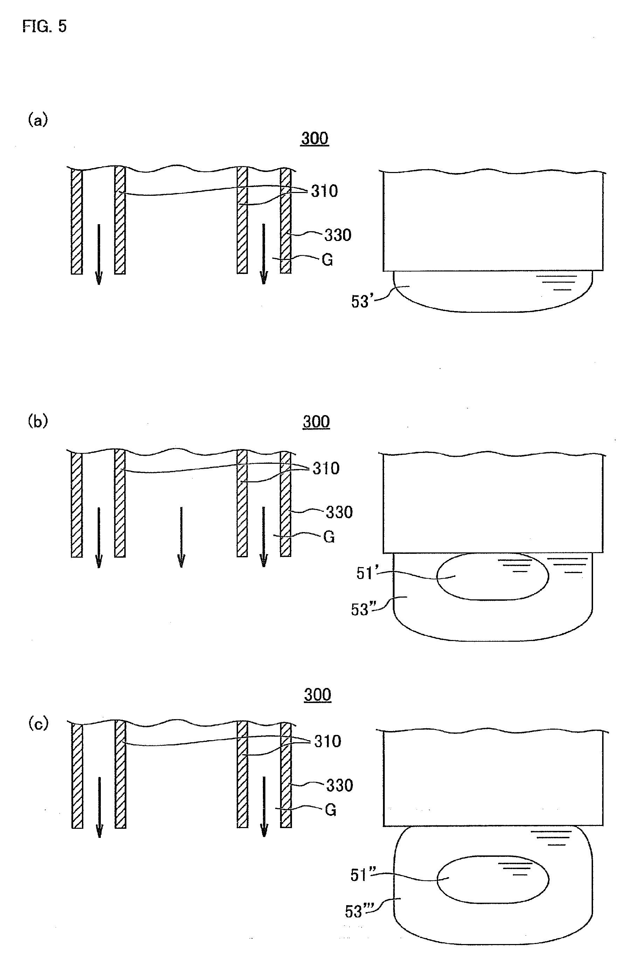

Referring to FIG. 5, first, a hard candy composition melt 53' is poured from a gap G between an inner pipe 310 and an outer pipe 330 (FIG. 5a). Afterwards, a dispersed system 51'is poured from the inner pipe 310, while pouring a hard candy composition melt 53" from the gap G (FIG. 5b). Thereafter, a melt 53"' is further poured from the gap G (FIG. 5c), thereby disposing the dispersed system within the melt.

Although FIGS. 5a and 5c show that only the hard candy composition melt is poured (this is preferable because the dispersed system can be easily surrounded by the hard candy composition), the melt can be poured along with the dispersed system as long as the melt is preferentially poured. Here, "preferentially" indicates that the melt is poured at a lower speed compared to a speed at which the melt is poured in a previous or a subsequent step.

The procedure shown in FIGS. 5a to 5c can be repeated for a plurality of times as required. This can allow for rapid manufacture of a confectionery 10A, as shown in FIG. 2, in which a plurality of first regions 20a and 20b are surrounded.

### EXAMPLES

### Example 1

Reduced maltose starch syrup, being boiled down until moisture content is 1% by mass, was cooled down to 150°C. Thereafter, a hard candy composition melt was prepared by adding and agitating a mixture of butter and lecithin, brown sugar flavoring, and caramel pigment, which were melted by heat and blended in advance. Content thereof was as shown in Table 1.

**[Table 1]**

| Constituents | Content (g) |
|---|---|
| Reduced Maltose Starch Syrup (Boiled Down) | 100.0 |
| Butter | 5.0 |
| Lecithin | 0.2 |
| Brown Sugar Flavoring | 0.3 |
| Caramel Pigment | 0.2 |
| Total | 105.7 |

A glucide mixture as the dispersoid was prepared by: boiling down reduced maltose starch syrup until moisture content was 10% by mass; cooling down to 80°C; adding glycerin and milk flavoring thereto; and agitating. Aside therefrom, butter oil as the dispersion medium and condensed ricinoleic acid pentaglycerine as the emulsifier were melted at 40 to 50°C, and blended. A dispersed system composed of a liquid dispersoid and an oil-based dispersion medium was prepared by adding the glucide mixture in small amounts to the mixture of the dispersion medium and the emulsifier, and agitating. The content was according to that shown in Table 2.

**[Table 2]**

| Constituents | Content (g) |
|---|---|
| Reduced Maltose Starch | 81.0 |
| Syrup (Boiled Down) | |
| Glycerin | 9.0 |
| Butter Oil | 10.0 |
| Condensed Ricinoleic Acid Pentaglycerine | 0.5 |
| Milk Flavoring | 0.3 |
| Total | 100.8 |

Multi-region confectioneries were prepared by the procedure shown in FIGS. 4 and 5 so as to dispose the hard candy composition thus prepared in the second region and the dispersed system composed of the liquid dispersoid and the oil-based dispersion medium in the first region. Each confectionery was prepared so that the content of the dispersed system was 12.5% by mass, 15.2% by mass, or 20.0% by mass with respect to a mass of the entire confectionery, by changing the content of the melt.

### Comparative Example 1

A confectionery was manufactured by the same procedure as that of Example 1, except for a dispersed system including an aqueous dispersion medium, prepared in accordance with the following procedure, being used in place of the dispersed system composed of the liquid dispersoid and the oil-based dispersion medium. The dispersed system including an aqueous dispersion medium was prepared by: boiling down reduced maltose starch syrup until moisture content was 10% by mass; cooling down to 80°C; adding glycerin and agitating; adding a mixture of butter oil and lecithin, which were heated, melted, and blended in advance, and milk flavoring thereto in small amounts; and agitating. The content was according to that shown in Table 3.

**[Table 3]**

| Constituents | Content (g) |
|---|---|
| Reduced Maltose Starch | 81.0 |
| Syrup (Boiled Down) | |
| Glycerin | 9.0 |
| Butter Oil | 10.0 |
| Lecitin | 0.5 |
| Milk Flavoring | 0.3 |
| Total | 100.8 |

### Comparative Example 2

A confectionery was manufactured using the hard candy composition and the dispersed system used in Example 1 by the stamping method, in which the dispersed system was wrapped by the semi-cured hard candy composition.

### Assessment 1 - Visual Centering

Each of the confectioneries manufactured in Example 1 and Comparative Example 1 was observed and assessed in accordance with the following criteria. The results thereof are shown in Table 4.
Good: The first region stays at a center of the confectionery
Bad: The first region cannot be distinguished from the second region, or is dispersed from a center toward end portions of the confectionery

**[Table 4]**

| Content of 1st and 2nd Regions (Mass) | | | | Rating of Confectionery | |
|---|---|---|---|---|---|
| | | | | Visual Centering | |
| Ratio of 1st Region (%) | 1st Region (g) | 2nd Region (g) | Total (g) | Example 1 | Comparative Example 1 |
| 12.5 | 0.5 | 3.5 | 4.0 | Good | Bad |
| 15.2 | 0.5 | 2.8 | 3.3 | Good | Bad |
| 20.0 | 0.5 | 2.0 | 2.5 | Good | Bad |

As shown in Table 4, in the multi-region confectionery manufactured in Example 1, unlike the confectionery of Comparative Example 1, the first region surrounded by the second region and including the dispersed system composed of the liquid dispersoid and the oil-based dispersion medium was formed. This showed that generation of air bubbles can be largely suppressed, thereby suppressing roughness felt in the mouth, while making the most of the soft component (for example, allowing a consumer to enjoy the taste of sweeteners and flavorings).

In addition, Example 1 using the dispersed system composed of the liquid dispersoid and the oil-based dispersion medium showed that a large amount, no less than 12.5% by mass, of the soft component can be completely surrounded, which is difficult with the conventional stamping method.

### Assessment 2 - Taste Functionality

The confectioneries manufactured in Example 1 and Comparative Examples 1 and 2 were consumed and assessed for the functionality thereof by the mouth by 20 participants. As shown in Table 5, when adding together the results thereof, the confectionery manufactured in Example 1 turned out to have superior functionality, because sweetness and flavor suddenly changed by a liquid component spreading in the mouth in a final phase of consumption of the confectionery. On the other hand, the confectionery manufactured in Comparative Example 1 turned out to have inferior functionality, because sweetness and flavor were released in an initial phase of consumption of the confectionery and lost in a short time. In addition, the confectionery manufactured in Comparative Example 2 turned out to have an extremely inferior functionality, because many of the participants felt an unpleasant roughness in the mouth.

**[Table 5]**

| Content of 1st and 2nd | | | | Rating of Confectionery | | |
|---|---|---|---|---|---|---|
| Regions (Mass) | | | | Taste Functionality | | |
| Ratio of 1st Region (%) | 1st Region (g) | 2nd Region (g) | Total (g) | Example 1 | Comparative Example 1 | Comparative Example 2 |
| 12.5 | 0.5 | 3.5 | 4.0 | Superior | Inferior | Inferior |
| 15.2 | 0.5 | 2.8 | 3.3 | Superior | Inferior | Inferior |
| 20.0 | 0.5 | 2.0 | 2.5 | Superior | Inferior | Inferior |

### Test Example 1

A glucide mixture was prepared by: boiling down reduced maltose starch syrup until moisture content was 10% by mass; cooling down to 80°C; adding glycerin, mint flavoring and gardenia blue pigment thereto; and agitating. Aside therefrom, hydrogenated palm-based oil (pour point: 40°C) and the emulsifiers shown in Table 7 were melted at 40 to 50°C and blended. A dispersed system including an oil-based dispersion medium was prepared by adding the glucide mixture in small amounts to the mixture of the oil and fat and the emulsifier, thereby emulsifying the mixture. The content was according to that shown in Table 6.

**[Table 6]**

| Constituents | Content (g) |
|---|---|
| Reduced Maltose Starch | 81.0 |
| Syrup (Boiled Down) | |
| Glycerin | 9.0 |
| Mint Flavoring | 1.0 |
| Gardenia Blue Pigment | 0.5 |
| Hydrogenated Palm-Based Oil | 10.0 |
| Emulsifier | 0.5 |
| Total | 102.0 |

### Assessment 3 - Dispersed System Stability

The dispersed system including the oil-based dispersion medium manufactured in Test Example was observed and assessed in accordance with the following criteria. The results thereof are shown in Table 7.
Good: The dispersion medium is oil-based and not separated
Bad: The dispersion medium became aqueous (phase inversion has occurred) or is separated

**[Table 7]**

| Emulsifiers | HLB | Rating of Dispersed System Visual Centering |
|---|---|---|
| Lecithin | - | Good |
| Glycerin Fatty Acid Ester | - | Good |
| Condensed Ricinoleic Acid Pentaglycerine | - | Good |
| Triolein Acid Pentaglycerine | 7.0 | Good |

As shown in Table 7, it turned out that a highly stable dispersed system can be prepared even with an arbitrary selected emulsifier, by mixing so that the dispersion medium is oil-based.

### Test Example 2

A state of a dispersed system including an oil-based dispersion medium was evaluated by the same procedure and on the same criteria as Test Example 1 except for emulsifiers shown in Table 8 being used and an amount thereof being changed from 0.5 g to 1.0 g. The results thereof are shown in Table 8.

**[Table 8]**

| Emulsifiers | HLB | Rating of Dispersed System Visual Centering |
|---|---|---|
| Lecithin | 3 to 4 | Good |
| High-purity lecithin | --- | Good |
| Condensed triglycerin ricinoleate | --- | Good |
| Condensed tetraglycerin ricinoleate | --- | Good |
| Condensed hexaglycerin ricinoleate | --- | Good |
| Condensed pentaglycerin ricinoleate | --- | Good |
| Monoglyceride citrate | --- | Good |
| Pentaglycerin trioleate | 7.0 | Good |
| Distilled monoglyceride (edible hydrogenated fat) + Lecitin (1:1 mixture) | 4.3 / 3 to 4 | Good |
| Distilled monoglyceride (Behenic acid) + Lecitin (1:1 mixture) | 4.2 / 3 to 4 | Good |
| Reacted monoglyceride (Behenic acid) + Lecitin (1:1 mixture) | 2.8 / 3 to 4 | Good |
| Decaglycerin pentaoleate + Lecitin (1:1 mixture) | 4.5 / 3 to 4 | Good |
| Decaglycerin decaoleate + Lecitin (1:1 mixture) | 3.0 / 3 to 4 | Good |
| Pentaglycerin trioleate + Lecitin (1:1 mixture) | 7.0 / 3 to 4 | Good |

As shown in Table 8, it turned out that a highly stable dispersed system can be prepared even with an arbitrary selected emulsifier, by mixing so that the dispersion medium is oil-based.

### Test Example 3

A state of a dispersed system including an oil-based dispersion medium was evaluated by the same procedure and on the same criteria as that of Test Example 2 except for medium-chain triglyceride (pour point: 10°C) being used instead of hydrogenated palm-based oil and emulsifiers shown in Table 9 being used. The results thereof are shown in Table 9.

**[Table 9]**

| Emulsifiers | HLB | Rating of Dispersed System Visual Centering |
|---|---|---|
| Condensed triglycerin ricinoleate | --- | Good |
| Condensed tetraglycerin ricinoleate | --- | Good |
| Condensed hexaglycerin ricinoleate | --- | Good |
| Condensed pentaglycerin ricinoleate | --- | Good |
| Distilled monoglyceride (edible hydrogenated fat) + Lecitin (1:1 mixture) | 4.3 / 3 to 4 | Good |
| Distilled monoglyceride (Behenic acid) + Lecitin (1:1 mixture) | 4.2 / 3 to 4 | Good |
| Reacted monoglyceride (Behenic acid) + Lecitin (1:1 mixture) | 2.8 / 3 to 4 | Good |
| Decaglycerin pentaoleate + Lecitin (1:1 mixture) | 4.5 / 3 to 4 | Good |
| Decaglycerin decaoleate + Lecitin (1;1 mixture) | 3.0 / 3 to 4 | Good |
| Pentaglycerin trioleate + Lecitin (1:1 mixture) | 7.0 / 3 to 4 | Good |

As shown in Table 9, it turned out that a highly stable dispersed system can be prepared even with an arbitrary selected emulsifier, by mixing so that the dispersion medium is oil-based.

### Test Example 4

A glucide mixture was prepared by: boiling down reduced maltose starch syrup until moisture content was 10% by mass; cooling down to 80°C; adding glycerin, mint flavoring and gardenia blue pigment thereto; and agitating. Aside therefrom, oils and fats shown in Table 11 (pour point: no higher than 20°C) and condensed pentaglycerin ricinoleate were melted at ambient temperature and blended. A dispersed system including an oil-based dispersion medium was prepared by adding the glucide mixture in small amounts to the mixture of the oil and fat and the emulsifier, thereby emulsifying the mixture. The content was according to that shown in Table 10.

**[Table 10]**

| Constituents | Content (g) |
|---|---|
| Reduced Maltose Starch | 81.0 |
| Syrup (Boiled Down) | |
| Glycerin | 9.0 |
| Mint Flavoring | 1.0 |
| Gardenia Blue Pigment | 0.5 |
| Oil and Fat (Pour Point: No Higher Than 20°C) | 10.0 |
| Condensed Pentaglycerin Ricinoleate | 1.0 |
| Total | 102.5 |

A state of each of the dispersed systems including an oil-based dispersion medium manufactured in Test Example was observed and assessed in accordance with the same criteria as in Assessment 3. The results thereof are shown in Table 11.

**[Table 11]**

| Oils and Fats | Pour Point | Rating of Dispersed System Visual Centering |
|---|---|---|
| Safflower Oil | No higher than 20°C | Good |
| Peanut Oil | No higher than 20°C | Good |
| Rice Bran Oil | No higher than 20°C | Good |
| Sesame Oil | No higher than 20°C | Good |
| Olive Oil | No higher than 20°C | Good |
| Grape Seed Oil | No higher than 20°C | Good |
| Perilla Oil | No higher than 20°C | Good |
| Palm Oil | No higher than 20°C | Good |
| Soybean Oil | No higher than 20°C | Good |
| Canola Oil | No higher than 20°C | Good |

As shown in Table 11, it turned out that a highly stable dispersed system can be prepared even with an arbitrary selected oil and fat, by mixing so that the dispersion medium is oil-based.

### Test Example 5

A dispersed system was prepared by the same procedure as that of Test Example 4, except for oils and fats shown in Table 13 (pour point: no higher than 20°C) and monoglyceride citrate being melted and blended at 40 to 50°C. The content was according to that shown in Table 12.

**[Table 12]**

| Constituents | Content (g) |
|---|---|
| Reduced Maltose Starch | 81.0 |
| Syrup (Boiled Down) | |
| Glycerin | 9.0 |
| Mint Flavoring | 1.0 |
| Gardenia Blue Pigment | 0.5 |
| Oil and Fat (Pour Point: No Higher Than 20°C) | 10.0 |
| Monoglyceride Citrate | 1.0 |
| Total | 102.5 |

A state of each of the dispersed systems including an oil-based dispersion medium manufactured in Test Example was observed and assessed in accordance with the same criteria as in Assessment 3. The results thereof are shown in Table 13.

**[Table 13]**

| Oils and Fats | Pour Point | Rating of Dispersed System Visual Centering |
|---|---|---|
| Safflower Oil | No higher than 20°C | Good |
| Rice Bran Oil | No higher than 20°C | Good |
| Grape Seed Oil | No higher than 20°C | Good |
| Palm Oil | No higher than 20°C | Good |
| Canola Oil | No higher than 20°C | Good |

As shown in Table 13, it turned out that a highly stable dispersed system can be prepared even with an arbitrary selected oil and fat, by mixing so that the dispersion medium is oil-based.

### Examples 3 and Comparative Example 3

A hard candy composition melt was prepared by: boiling down reduced paratinose (water was added thereto when boiled) until the moisture content was 1% by mass; cooling down the reduced paratinose to 150°C; adding citric acid, a flavoring, and acesulfame-K thereto; and agitating. The content was according to that shown in Table 14.

**[Table 14]**

| Constituents | Content (g) |
|---|---|
| Reduced Paratinose (Boiled Down) | 100.0 |
| Citric Acid | 0.5 |
| Soda Flavoring | 0.2 |
| Acesulfame-K | 0.1 |
| Total | 100.8 |

A dispersed system composed of a liquid dispersoid and an oil-based dispersion medium was prepared by the same procedure as that of Example 1, except for a composition shown in Table 15 being adopted.

**[Table 15]**

| Constituents | Content (g) |
|---|---|
| Reduced Maltose Starch Syrup (Boiled Down) | 85.0 |
| Glycerin | 10.0 |
| Hydrogenated Palm-Based Oil | 5.0 |
| Condensed Ricinoleic | 0.3 |
| Acid Pentaglycerine | |
| Mint Flavoring | 1.0 |
| Gardenia Blue Pigment | 0.4 |
| Total | 101.7 |

Multi-region confectioneries were manufactured by using the hard candy composition and the dispersed system or the O/W type emulsion, in accordance with the same procedure as that of Example 1, except for the content thereof being as shown in Table 10. Each of the confectioneries was assessed in accordance with the same criteria as that of Example 1. The results thereof are shown in Table 16.

**[Table 16]**

| Content of 1st and 2nd Regions (Mass) | | | | Rating of Confectionery Visual Centering |
|---|---|---|---|---|
| Ratio of 1st Region (%) | 1st Region (g) | 2nd Region (g) | Total (g) | |
| 9.1 | 0.13 | 1.3 | 1.43 | Good |
| 10.3 | 0.15 | 1.3 | 1.45 | Good |
| 17.7 | 0.28 | 1.3 | 1.58 | Good |
| 23.1 | 0.39 | 1.3 | 1.69 | Good |
| 30.1 | 0.56 | 1.3 | 1.86 | Good |

As shown in Table 16, in Example 3, an extremely large amount, 30.1% by mass, of the first region stayed in a center of the confectionery in which a total weight of the first and the second regions is 1.86 g. This showed that high-quality manufacture of a small-sized confectionery, in which, for example, a total weight of the first and the second regions is no of greater than 2 g, which has conventionally been impossible, is possible.

### Examples 4 to 6

A hard candy composition melt was prepared by: boiling down reduced paratinose (water was added thereto when boiled) until the moisture content was 1% by mass; cooling down the reduced paratinose to 150°C; adding a flavoring and acesulfame-K thereto; and agitating. The content was according to that shown in Table 17.

**[Table 17]**

| Constituents | Content (g) (in Examples 4 to 6) |
|---|---|
| Reduced Palatinose (Boiled Down) | 100.0 |
| Mint Flavoring | 0.2 |
| Acesulfame-K | 0.1 |
| Total | 100.3 |

A glucide mixture as the dispersoid was prepared by: blending reduced maltose starch syrup and sorbitol; boiling down the mixture until moisture content was 5% by mass; cooling down to 80°C; adding glycerin, mint flavoring and gardenia blue pigment thereto; and agitating. Aside therefrom, an oil-based dispersion medium shown in Table 18 as the dispersion medium, and condensed ricinoleic acid pentaglycerine as the emulsifier were melted and blended at 40 to 50°C. A dispersed system composed of a liquid dispersoid and an oil-based dispersion medium was prepared by adding the abovementioned glucide mixture in small amounts to a mixture of the dispersion medium and the emulsifier thus obtained, and agitating. The content was according to that shown in Table 18.

**[Table 18]**

| Constituents | | Content (g) | | |
|---|---|---|---|---|
| | | Example 4 | Example 5 | Example 6 |
| Reduced Maltose Starch Syrup (Boiled Down) | | 45.0 | 45.0 | 45.0 |
| Sorbitol | | 20.0 | 20.0 | 20.0 |
| Glycerin | | 25.0 | 25.0 | 25.0 |
| Gardenia Blue Pigment | | 0.4 | 0.4 | 0.4 |
| Mint Flavoring | | 1.0 | 1.0 | 1.0 |
| Dispersi on Medium | Hydrogenated Palm-Based Oil (Pour Point: 40°C) | 10.0 | | |
| | Hydrogenated Palm-Based Oil (Pour Point: 35°C) | | 10.0 | |
| | Medium-Chain Triglyceride (Pour Point: 10°C) | | | 10.0 |
| Condensed Ricinoleic Acid Pentaglycerine | | 0.5 | 0.5 | 0.5 |
| Total | | 101.9 | 101.9 | 101.9 |

A multi-region confectionery was manufactured using the abovementioned hard candy composition and the dispersed system, by the same procedure as that of Example 1, except for a composition shown in Table 19 being adopted. Each of the confectioneries was assessed in accordance with the same criteria as that of Example 1. The results thereof are shown in Table 19.

**[Table 19]**

| Content of 1st and 2nd Regions (Mass) | | | | Rating of Confectionery Visual Centering | | |
|---|---|---|---|---|---|---|
| Ratio of 1st Region (%) | 1st Region (g) | 2nd Region (g) | Total (g) | Example 4 | Example 5 | Example 6 |
| 12.5 | 0.14 | 0.98 | 1.12 | Good | Good | Good |
| 30.0 | 0.42 | 0.98 | 1.40 | Good | Good | Good |

As shown in Table 19, in the multi-region confectioneries manufactured in Examples 4 to 6, the first region surrounded by the second region and including the dispersed system composed of the liquid dispersoid and the oil-based dispersion medium was formed regardless of a pour point of the dispersion medium. This showed that generation of air bubbles can be largely suppressed, thereby suppressing roughness felt in the mouth, while making the most of the soft component (for example, allowing a consumer to enjoy the taste of sweeteners and flavorings).

In addition, regardless of a pour point of the dispersion medium, in any of Examples 4 to 6, an extremely large amount, 30.0% by mass, of the first region stayed in a center of the confectionery composition in which a total weight of the first and the second regions is 1.40 g.

This showed that high-quality manufacture of a small-sized confectionery, in which, for example, a total weight of the first and the second regions is no of greater than 2 g, which has conventionally been impossible, is possible.

### Assessment 4

The confectioneries manufactured in Examples 4 to 6 were consumed and assessed for the functionality thereof by the mouth by 20 participants. When adding together the results thereof, the confectionery manufactured in Examples 4 to 6 turned out to have superior functionality, because sweetness and flavor suddenly changed by a liquid component spreading in the mouth in a final phase of consumption of the confectionery.

In particular, the functionality of the confectioneries was superior in Example 6, Exapmle 5, Example 4 in this order. It is presumed that this result depends on the diffuseness of the liquid component in mouth. In other words, the diffuseness is high in Example 6 in which the oil-based dispersion medium having a pour point of 10°C was used, Example 5 in which the oil-based dispersion medium having a pour point of 35°C was used, and Example 4 in which the oil-based dispersion medium having a pour point of 40°C was used, in this order.

### BRIEF DESCRIPTION OF THE DRAWINGS

FIG. 1 is a cross-sectional view of a multi-region confectionery according to an embodiment of the present invention;
FIG. 2 is a cross-sectional view of a multi-region confectionery according to another embodiment of the present invention;
FIG. 3 is a cross-sectional view of a multi-region confectionery according to still another embodiment of the present invention;
FIG. 4 is a diagram showing a manufacturing method of the multi-region confectionery according to an embodiment of the present invention;
FIG. 5 is a diagram showing a manufacturing method of the multi-region confectionery according to an embodiment of the present invention; and
FIG. 6 is a cross-sectional view of a confectionery according to a conventionally known example.

### EXPLANATION OF REFERENCE NUMERALS

- 10: Multi-region confectionery
- 20: First region
- 30: Second region
- 35: Impression
- 200: Deposit die
- 300: Depositor
- 310: Inner pipe
- 330: Outer pipe
- G: Gap

## Claims

1. A multi-region confectionery comprising:
a first region comprising a dispersed system composed of a liquid dispersoid and an oil-based dispersion medium; and
a second region composed of a cured body of a hard candy composition, which surrounds at least a portion of the first region.

2. The multi-region confectionery according to claim 1, wherein the oil-based dispersion medium has a pour point or a melting point of no greater than 37°C.

3. The multi-region confectionery according to claim 2, wherein the oil-based dispersion medium has a pour point or a melting point of no greater than 20°C.

4. The multi-region confectionery according to claim 1, wherein the oil-based dispersion medium has a pour point or a melting point of no less than 20°C and no greater than 45°C.

5. The multi-region confectionery according to any one of claims 1 to 4, wherein the dispersed system is included in an amount of no less than 5% by mass of the entire multi-region confectionery.

6. The multi-region confectionery according to any one of claims 1 to 5, wherein the dispersed system is included in an amount of no greater than 70% by mass of the entire multi-region confectionery.

7. The multi-region confectionery according to claim 5 or 6, wherein the dispersed system is included in an amount of from 15% to 50% by mass of the entire multi-region confectionery.

8. The multi-region confectionery according to any one of claims 1 to 7, wherein the multi-region confectionery has a piece size of no greater than 2 g.

9. The multi-region confectionery according to any one of claims 1 to 8, wherein the dispersed system comprises an emulsifier.

10. The multi-region confectionery according to claim 9, wherein the emulsifier is selected from the group consisting of monoglycerol fatty acid ester, lecithin, organic acid glycerin fatty acid ester, polyglycerol fatty acid ester, polyglycerol condensed ricinoleic acid ester, sorbitan fatty acid ester; sucrose fatty acid ester; propylene glycol fatty acid ester; and combinations thereof.

11. The multi-region confectionery according to claim 9 or 10, wherein the emulsifier is selected from the group consisting of glycerin based emulsifiers, polyglycerol based emulsifiers, and combinations thereof.

12. The multi-region confectionery according to any one of claims 1 to 11, wherein the first region is released after an initial phase of consumption.

13. The multi-region confectionery according to claim 12, wherein the first region release provides a liquid sensation.

14. The multi-region confectionery according to claim 12, wherein the first region release provides a solid sensation.

15. A manufacturing method for a multi-region confectionery, the method comprising steps of: disposing a dispersed system composed of a liquid dispersoid and an oil-based dispersion medium within a hard candy composition melt; and then curing the melt.

16. The manufacturing method according to claim 15, wherein the oil-based dispersion medium has a pour point or a melting point of no greater than 37°C.

17. The manufacturing method according to claim 16, wherein the oil-based dispersion medium has a pour point or a melting point of no greater than 20°C.

18. The manufacturing method according to claim 15, wherein the oil-based dispersion medium has a pour point or a melting point of no less than 20°C and no greater than 45°C.

19. The manufacturing method according to any one of claims 15 to 18, wherein a depositor is used having a double pipe structure comprising: an inner pipe; and an outer pipe provided on an outer side of the inner pipe with a gap, and pouring is performed to deposit the dispersed system from the inner pipe and the melt from the gap.

20. The manufacturing method according to claim 19, wherein the deposition is performed by: preferentially pouring the melt; pouring the dispersed system and the melt; and then preferentially pouring the melt.

21. The manufacturing method according to any one of claims 15 to 20, wherein the dispersed system is included in an amount of no less than 5% by mass with respect to a mass of the entire the multi-region confectionery.

22. The manufacturing method according to any one of claims 15 to 21, wherein the dispersed system is included in an amount of no greater than 70% by mass of the entire multi-region confectionery.

23. The manufacturing method according to claim 21 or 22, wherein the dispersed system is included in an amount of from about 15% to about 50% by mass of the entire multi-region confectionery.

24. The manufacturing method according to any one of claims 15 to 23, wherein the multi-region confectionery has a piece size of no greater than 2 g.

25. The manufacturing method according to any one of claims 15 to 24, wherein the dispersed system comprises an emulsifier.

26. The manufacturing method according to claim 25, wherein the emulsifier is selected from the group consisting of monoglycerol fatty acid ester, lecithin, organic acid glycerin fatty acid ester, polyglycerol fatty acid ester, polyglycerol condensed ricinoleic acid ester, sorbitan fatty acid ester; sucrose fatty acid ester; propylene glycol fatty acid ester; and combinations thereof.

27. The manufacturing method according to claim 25 or 26, wherein the emulsifier is selected from the group consisting of glycerin based emulsifiers, polyglycerol based emulsifiers, and combinations thereof.

28. The manufacturing method according to any one of claims 15 to 27, wherein the dispersed system is released after an initial phase of consumption.

29. The manufacturing method according to claim 28, wherein the first region release provides a liquid sensation.

30. The manufacturing method according to claim 28, wherein the first region release provides a solid sensation.
